# EUROPEAN PATENT APPLICATION

(11) **EP 1 951 001 A1**
(43) Date of publication of application: **30.07.2008**
(21) Application number: 07425038.2
(22) Date of filing: 24.01.2007
(51) Int. Cl.: H05B 3/84

(54) **Heatable vehicle glazing**

(71) Applicant: Pilkington Italia S.p.A., 66050 San Salvo (CH) (IT); Pilkington Group Limited, St. Helens Merseyside WA10 3TT (GB)
(72) Inventor: Gagliardi, Giovanni, 66054 Vasto (CH) (IT); Dixon, Jonathan Barclay, Lancashire WN8 7PD (GB)
(74) Representative: Papa, Elisabetta

(57) **Abstract**

A vehicle glazing comprising a pane of glazing material, e.g. glass, and a heatable coating layer provided on a surface of the glazing, in electrical contact with first and second electrically conductive busbars, each busbar having a length, a width and first and second ends, the width of at least one of the busbars being gradually reduced towards at least one of its ends. The glazing may be a laminate, having a further pane of glazing material joined to the pane of glazing material by a ply of interlayer material.

## Description

The present invention relates to a heatable vehicle glazing, and in particular to a vehicle glazing which incorporates a heatable coating layer.

Vehicle glazings, especially windscreens and backlights (rear window glazings), may be equipped with heating means that facilitate de-misting and/or de-icing of the glazings as and when necessary. The heating means may be in the form of printed conductive lines on a toughened backlight, or a heatable conductive coating in a laminated backlight and in a laminated windscreen. Heatable sidelights (side window glazings) are also known; these may be provided with wires or a heatable conductive coating.

For glazings provided with a heatable conductive coating, it is often desirable to be able to locally control the electrical resistance of the coating. Many glazings have a non-quadrate shape, which often leads to uneven heating of the glazing over the extent of the coating due to regions of higher power density (and thus higher temperature), which are generated because of the shape of the glazing. Such regions are known in the art as "hotspots" in the coating. The presence of one or more hotspots in a coating is highly undesirable because there is a risk that the occupants of a vehicle glazed with such a glazing may touch the glazing in the region of the one or more hotspots and burn themselves. Furthermore, with a laminated glazing there is a risk of the glazing delaminating in the region of the one or more hotspots, i.e. the glazing plies and ply of interlayer material which form the laminated glazing separate, leaving at least a portion of the glazing with reduced, if any, visibility.

Many attempts have been made by glazing manufacturers to alleviate the problem of unwanted, uneven heating patterns, especially the occurrence of hotspots, in glazings. WO 2004/032569 A2 describes a heated coated windscreen in which selected portions of the coating between the busbars are segmented by straight, diverging lines to reduce the difference in watt density, and thus attempt to minimise the appearance of hotspots, between the coating portions. Such a solution however appears to have only limited success. WO 2006/091531 A2 describes an electrically heatable transparency in which the thickness of a busbar (i.e. the depth of the busbar in a direction perpendicular to the plane of the transparency) is tapered at each of its ends. The ends of the busbar are tapered so as to avoid a perpendicular step down from the top surface of the busbar to the transparency below, thus avoiding electrical discontinuity between the busbar and a coating which is deposited over it. The slope created at each end of the busbar ensures continuous electrical contact with the coating and even heating thereof. Such a solution does not however alleviate the problem of hotspots generally that are observed with glazings of non-quadrate shapes.

It is an object of the present invention to provide a solution which addresses the problem of undesirable, uneven heating patterns, especially hotspots, in non-quadrate shaped heated coated glazings.

According to the present invention there is provided a vehicle glazing comprising:
a pane of glazing material, and
a heatable coating layer, provided on a surface of the glazing, in electrical contact with first and second electrically conductive busbars,
each busbar having a length and a width, and first and second ends,
wherein the width of at least one of the busbars is gradually reduced towards at least one of its ends, thereby reducing, and preferably eliminating, unevenness in heating of the glazing, especially the occurrence of one or more hotspots in the heatable coating layer. Tapering of the width of at least one of the busbars in this way, especially when the heatable coating layer is non-quadrate in shape, may reduce the intensity of hotspots (and preferably even eliminate them). This is particularly so for hotspots which may otherwise be observed in the regions of the coating at the ends of a busbar.

Busbars are typically made from thin (less than 0.2 mm thick, usually 0.1 mm thick) strips of conductive metal, for example copper, or from printed and fired silver-based conductive inks, or they may be made from a thermoplastic material in which particles of a conductive material are dispersed. Busbars are usually located along the top and bottom edges of the chosen substrate in a glazing as longitudinal strips. For the avoidance of doubt, use of the terms "top", "bottom" and "side" in relation to a glazing, or its component parts, in this specification is made with reference to the orientation of the glazing when fitted into a vehicle. Some variation in the design of busbars is known, for example a busbar at the top of a glazing may extend down one side of the glazing to allow convenient connection of both busbars to a power source, or a closed loop of busbar material may be appended to a busbar, all of which are within the scope of the present invention.

The pane of glazing material used in the glazing may be a pane of glass, preferably soda-lime-silica glass which may be clear or body-tinted, or it may be a pane of a rigid plastics material such as polycarbonate. Typically a pane of glazing material is used in a thickness between 1 and 10 mm, preferably between 1.5 and 6 mm.

The heatable coating layer is described as being "provided on a surface of the glazing" - by this is meant that the coating layer may be on a surface of the pane of glazing material or on a surface of some other layer comprised in the glazing but which is not explicitly disclosed. The heatable coating layer may be a layer of any conductive coating known in the art for the purpose of heating a vehicle glazing, and it may be provided by any suitable method known in the art, for example chemical vapour deposition. The layer may be a single layer (many nanometres thick) or it may be a composite stack of two or more layers, which need not be identical.

Preferably the reduction in width of the at least one busbar is between 10 % and 90 %, further preferably between 20 % and 85 % and most preferably between 30 % and 80 % to achieve an optimum reduction in intensity of one or more hotspots in the coating layer, at the same time as ensuring that the busbar itself does not overheat as a result of its reduced width and electrical current-carrying capacity.

Typically a vehicle glazing has a top edge, a bottom edge and two side edges, and the heatable coating layer has a length which extends in the direction between the top edge and the bottom edge of the glazing. The length of the coating layer may gradually reduce towards each of the side edges of the glazing, especially when the coating layer is of non-quadrate shape. Tapering of the width of at least one of the busbars at at least one of its ends appears to reduce, and sometimes alleviate, the problem of hotspots, four of which would typically otherwise occur at the corners of such a coating layer.

Electrical power may be supplied to each of the busbars at a location substantially at a mid-point along each of their lengths. This may be advantageous, especially when the width of each end of both busbars is tapered, because electrical current is supplied to the widest part of the busbars having the greatest current carrying capacity.

Preferably the heatable coating layer is a metal oxide based layer. Oxides of a metal such as tin, zinc, indium and tungsten may be used; it may be doped with a material such as fluorine, chlorine or antimony. Alternatively, the heatable coating layer may comprise at least one metal layer and at least one dielectric layer. A multilayer coating stack may result from use of alternate layers of metal (such as silver, gold, copper, nickel, chromium) and dielectric material (such as silicon, aluminium, titanium, vanadium).

The heatable coating layer may include an electrically isolated area through which radiation of specific wavelength or data, that would probably otherwise be blocked by the coating layer, may be transmitted. Provision of an electrically isolated area may be done to allow compatibility of the glazing with a particular technology associated with a vehicle into which the glazing may be fitted, such as an automated toll booth payment system. An electrically isolated area is effectively an area within the heatable coating layer that is devoid of coating. The absence of coating in the area may be as a result of no coating having been deposited or selective removal of the coating. An electrically isolated area may be formed by masking a particular area of the chosen substrate before the coating is deposited, or by selectively removing a part of the coating once it has been deposited, for example by laser ablation.

The heatable coating layer may be split into at least separate heatable zones. Any number of separate heatable zones is possible, however, when a coating is split, it is typical to have a glazing with three heatable zones to achieve a satisfactory heating pattern. Each heatable zone may be provided with its own busbar portions (the width of each of which may be tapered towards at least one of its ends), such that when the coating is viewed as a whole once power is supplied to it, an even heating pattern may be observed as a result of a substantially uniform power density over the entire coating.

Preferably a vehicle glazing may additionally comprise a further pane of glazing material, which may be joined to the pane of glazing material discussed earlier by a ply of interlayer material. The two panes of glazing material may be made of the same material or one may be glass and one may be plastic. The ply of interlayer material may be a flexible plastics material, which may be clear or body-tinted. Suitable interlayer materials include polyvinyl chloride ("PVC"), polyurethane ("PU"), ethyl vinyl acetate ("EVA"), polyethylene terephthalate ("PET") and polyvinyl butyral ("PVB"), the most common choice for lamination being PVB, typically used in 0.76 mm thickness, although 0.38 mm thickness is also used. In relation to a laminated glazing, a description of the heatable coating layer as being "provided on a surface of the glazing" means that the coating layer may be on a surface of one of the panes of glazing material, or on a surface of the ply of interlayer material. If the latter, the coating may be provided on a ply of PET, which itself may be interleaved between two plies of PVB forming a composite interlayer which is used to laminate the two panes of glazing material together.

A vehicle glazing according to the present invention may advantageously be used as a vehicle windscreen and/or a rear window and/or a side window and/or a roof window. When connected to a power supply to enable the heatable coating layer to perform its function, the glazing may exhibit a more even heating pattern overall as compared to prior art vehicle glazings.

For a better understanding, the present invention will now be more particularly described by way of non-limiting example with reference to, and as shown in, the accompanying schematic drawings (not to scale) wherein:
Figure 1 is a plan view of a prior art glazing,
Figure 2 is a cross-section along line I-I of Figure 1, and
Figure 3 is a plan view of a glazing according to the invention.

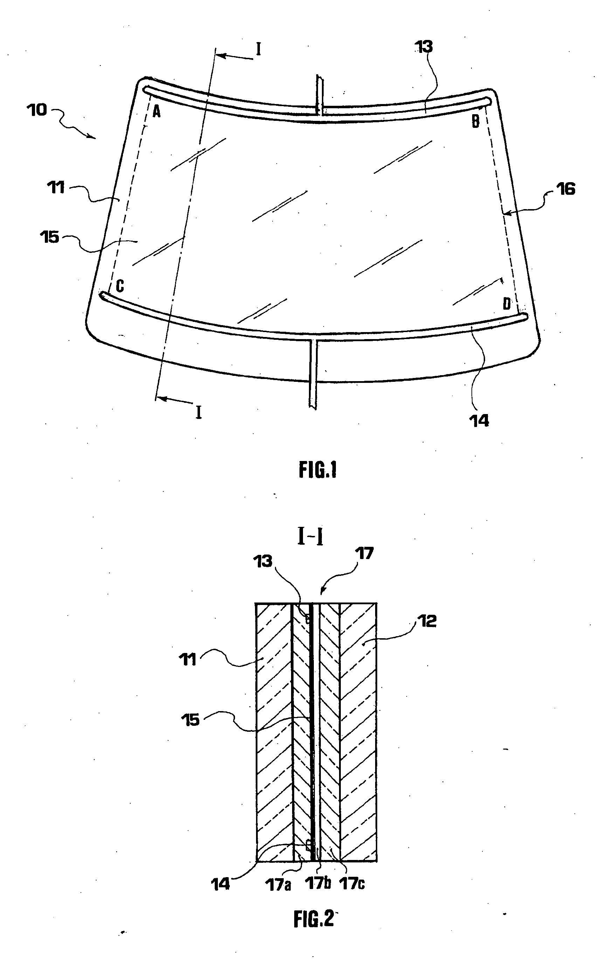

Figure 1 illustrates a prior art vehicle glazing 10, in the form of a laminated glazing, comprising outer ply of glazing material 11, in the form of a pane of glass, and upper busbar 13 and lower busbar 14, each in the form of printed and fired strips of a silver-based ink, within the laminate and located adjacent the top and bottom edges respectively thereof. Outer ply of glazing material 11 is laminated to inner ply of glazing material 12, also in the form of a pane of glass, by composite interlayer ply 17 as shown in Figure 2. By "outer ply of glazing material" is meant the ply that contacts the environment external of a vehicle into which the glazing may be fitted; by "inner ply of glazing material" is meant the ply that contacts the internal environment of said vehicle.

Included in laminate 10 there is also heatable coating layer 15, which can be any transparent electrically conductive coating known in the art for example a silver-based coating. The side edges of coating layer 15 are shown by dotted lines 16; the top and bottom edges overlap upper busbar 13 and lower busbar 14 respectively. Figure 2 shows that composite layer 17 is composed of first and second plies of PVB 17a,17c having ply of PET 17b between them. Heatable coating layer 15 is provided on a surface of ply of PET 17b and it extends between upper busbar 13 and lower busbar 14, which are also provided on ply of PET 17b. In an alternative embodiment (not shown) heatable coating layer 15 may be provided on an inner surface of one of the plies of glazing material 11,12, along with upper busbar 13 and lower busbar 14. Upper busbar 13 and lower busbar 14 provide electrical current to heatable coating layer 15 when connected to a power source, thereby enabling coating layer 15 to perform its heating function. Both upper busbar 13 and lower busbar 14 each has a substantially uniform width (subject to manufacturing tolerances) along its length.

Glazing 10 is non-quadrate in shape - it is trapezoidal. The shape of coating layer 15 approximately follows that of glazing 10, which often leads to the formation of hotspots in coating 15 when electrical power is supplied to it, especially in the corners labelled A, B, C and D.

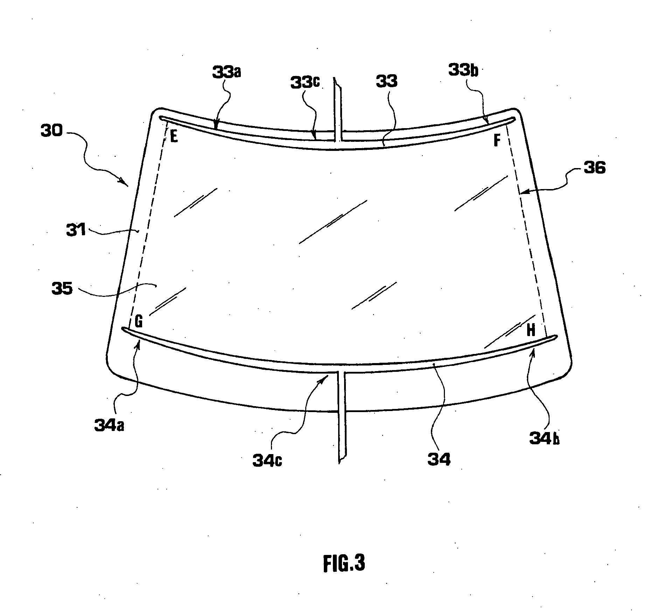

Figure 3 illustrates a glazing 30 according to the invention, which is also in the form of a laminated glazing. Glazing 30 is similar in composition and construction to glazing 10 shown in Figure 1 and 2 - it comprises outer pane of glazing material 31, in the form of a pane of glass, inner pane of glazing material 32 (not shown), upper busbar 33, lower busbar 34, heating coating layer 35 (with dotted lines 36 indicating the side edges thereof) and composite interlayer ply 37 (not shown).

The difference between glazing 30 and glazing 10 is in the busbars. Upper busbar 33 and lower busbar 34 shown in Figure 3 comprise end portions 33a,33b and 34a,34b respectively. The width of each busbar end portion 33a,33b,34a,34b gradually reduces towards the ends of busbars 33, 34 from the width of the centre portions 33c,34c. Typically the width of a busbar may be 20 mm, which is reduced down to 3 mm at the end of the taper - an 85 % reduction in the width of the busbar from its maximum width to its minimum width. Such a relatively massive reduction in the width of busbars 33 and 34 means that the corners of coating 35 labelled E and F exhibit virtually no localised increase in temperature (i.e. the hotspots in these regions are practically eliminated), whilst the corners labelled G and H exhibit reduced-intensity hotspots, the temperature of which have been reduced to below 100°C (95°C has been observed) from above 100°C (usually around 130°C), as was observed in prior art glazings.

## Claims

1. A vehicle glazing comprising a pane of glazing material, and a heatable coating layer, provided on a surface of the glazing, in electrical contact with first and second electrically conductive busbars, each busbar having a length and a width, and first and second ends, wherein the width of at least one of the busbars is gradually reduced towards at least one of its ends.

2. A vehicle glazing as claimed in claim 1 wherein the reduction in width of the at least one busbar is between 10 % and 90 %.

3. A vehicle glazing as claimed in claim 1 or claim 2 having a top edge, a bottom edge and two side edges, and the heatable coating layer having a length extending between the top edge and the bottom edge of the glazing, wherein the length of the coating layer gradually reduces towards each of the side edges of the glazing.

4. A vehicle glazing as claimed in any preceding claim wherein electrical power is supplied to each of the busbars at a location substantially at a mid-point along each of their lengths.

5. A vehicle glazing as claimed in any preceding claim wherein the heatable coating layer is a metal oxide based layer.

6. A vehicle glazing as claimed in any of claims 1 to 4 wherein the heatable coating layer comprises at least one metal layer and at least one dielectric layer.

7. A vehicle glazing as claimed in any preceding claim wherein the heatable coating layer includes an electrically isolated area.

8. A vehicle glazing as claimed in claim 7 wherein the heatable coating layer is split into at least three separate heatable zones.

9. A vehicle glazing as claimed in any preceding claim comprising a further pane of glazing material, which is joined to the pane of glazing material by a ply of interlayer material.

10. A vehicle glazing as claimed in claim 9 wherein the heatable coating layer is provided on a surface of one of the panes of glazing material.

11. A vehicle glazing as claimed in claim 9 wherein the heatable coating layer is provided on a surface of the ply of interlayer material.

12. Use of a vehicle glazing as claimed in any preceding claim as a windscreen and/or a rear window.
